**Europäisches Patentamt**

**European Patent Office**

**Office européen des brevets**

(11) Veröffentlichungsnummer: **0 187 909 B1**

## (12) EUROPÄISCHE PATENTSCHRIFT

(45) Veröffentlichungstag der Patentschrift: **07.08.91**

(21) Anmeldenummer: **85113997.2**

(22) Anmeldetag: **04.11.85**

(51) Int. Cl.⁵: **D21B 1/32**

(54) **Verfahren und Vorrichtung zum Entfernen von Verunreinigungen aus Altpapier.**

(30) Priorität: **19.12.84 CH 6035/84**

(43) Veröffentlichungstag der Anmeldung:
**23.07.86 Patentblatt 86/30**

(45) Bekanntmachung des Hinweises auf die
Patenterteilung:
**07.08.91 Patentblatt 91/32**

(84) Benannte Vertragsstaaten:
**AT DE FR SE**

(56) Entgegenhaltungen:
**DE-B- 2 610 581**
**DE-B- 2 813 448**

**TAPPI, Band 63, Nr. 9, September 1980, Seiten 113-116, Technical Association of the Pulp and Paper Industry, Atlanta, Columbia, US; L. Pfalzer: "Deinking of secondary fibers. A comparison of washing and flotation"**

(73) Patentinhaber: **SULZER-ESCHER WYSS GMBH**
**Escher Wyss-Strasse 25 Postfach 1380**
**W-7980 Ravensburg(DE)**

(72) Erfinder: **Matzke, Wolfgang, Dr.**
**Max-Reger-Strasse 28**
**W-7981 Berg(DE)**
Erfinder: **Mayr, Hermann**
**Burgsteige 1a**
**W-7906 Blaustein(DE)**

## Beschreibung

Die Erfindung betrifft ein Verfahren zur Entfernung von Verunreinigungen wie Druckfarben oder dergleichen aus Altpapier, wobei eine durch Auflösen von Altpapier gewonnene, mit Chemikalien versetzte Faserstoff-Suspension unter Abführung des Druckfarbenpartikel und gegebenenfalls andere flotierbare Substanzen enthaltenden Flotations-Schaumes als Flotations-Rejekt in einer Flotationsstufe flotiert und dann aus der flotierten Faserstoff-Suspension weitere Druckfarbenpartikel und Verunreinigungen in mindestens einer Waschstufe ausgewaschen und als Waschstufen-Rejekt abgeführt werden, sowie eine Vorrichtung zur Durchführung des Verfahrens.

Solche auch als Deinking bezeichnete Verfahren sind beispielsweise aus der DE-B 26 10 581 oder der DE A 31 44 561 bekannt. Auch in dem Fachaufsatz "Deinking of secondary fibers", TAPPI, Band 63, Nr. 9, September 1980, Seiten 113-116, werden Deinking-Verfahren dieser Art beschrieben. Dabei wird angestrebt, aus Altpapier auf umweltfreundliche und wirtschaftliche Weise einen möglichst weitgehend von Druckfarben und anderen Verunreinigungen befreiten Faserstoff von hohem Reinheitsgrad wiederzugewinnen.

Mit solchen Verfahren wird versucht, die beiden hauptsächlichen, in der Altpapieraufbereitungstechnik üblichen Deinking-Verfahren zu kombinieren, und die beispielsweise im "Wochenblatt für Papierfabrikation", Heft 20/1976, Seiten 778 - 784 (W.Matzke, Deinking-Waschen oder Flotation) gegenübergestellten Vorteile der beiden Verfahren gleichzeitig zu erreichen, um eine möglichst reine und möglichst gut von Druckfarben und anderen Verunreinigungen befreite Faserstoff-Suspension aus Altpapier zu gewinnen. In dieser Publikation wird dabei auf die Möglichkeit hingewiesen, in einer dem Waschverfahren vorgeschalteten Kurzflotations-Stufe einen beträchtlichen Teil der Verunreinigungen herauszunehmen.

Ein solches kombiniertes Verfahren ist jedoch kompliziert und erfordert einen relativ grossen apparativen Aufwand. Zudem ist in der Regel eine aufwendige, separate Reinigung der in den verschiedenen Verfahrensstufen anfallenden Rejekte erforderlich, falls die Umwelt nicht in unzulässiger Weise belastet werden soll.

Ausserdem hat sich gezeigt, dass gewisse Verfahren nicht alle Arten von Druckfarben einwandfrei entfernen lassen. Insbesondere hat sich die Entfernung bestimmter elektrostatischer Druckfarben als schwierig erwiesen, beispielsweise eingebrannte Kunststoff-Farben, die als Laser-Inks-bekannt sind.

Der vorliegenden Erfindung liegt daher die Aufgabe zugrunde, ein einfaches, wirtschaftliches und umweltschonendes Verfahren und eine Vorrichtung dazu zu schaffen, mit welchen Druckfarben und andere Verunreinigungen aus einem aus Altpapier gewonnenen Faserstoff mit besonders guter Effizienz entfernt werden können. Dabei sollen sich das erfindungsgemäße Verfahren und die entsprechende Vorrichtung besonders zur Entfernung schwierig zu entfernender Druckfarben, wie Laser-Inks oder dergleichen eignen.

Bei dem erfindungsgemäßem Verfahren wird die Aufgabe durch die Merkmale des Patentanspruches 1 gelöst.

Anspruch 4 zeigt eine Vorrichtung zur Durchführung das Verfahrens; Ansprüche 5 und 6 geben besonders vorteilhafte Ausführungsformen an.

Die Erfindung sowie zweckmäßige und vorteilhafte Weiterbildungen derselben werden anhand der in den Figuren dargestellten Ausführungsbeispiele näher erläutert. Es zeigen:

Figur 1 ein Ablaufschema eines Deinking-Verfahrens in Slockform,

Figur 2 eine Vorrichtung zum Deinking in schematischer Darstellung.

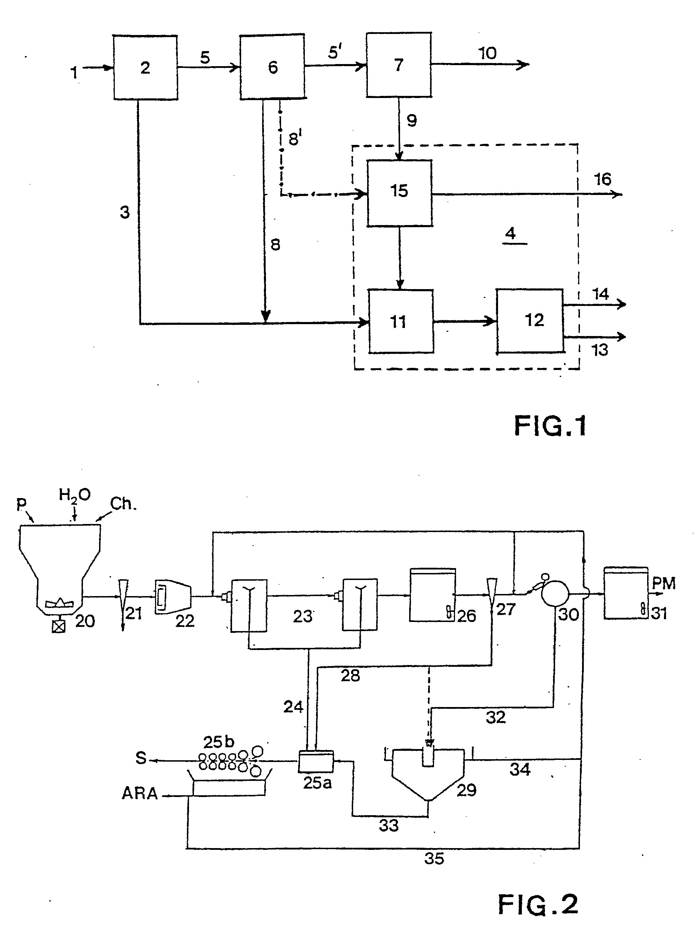

Bei dem in Figur 1 dargestellten Verfahrensschema wird die aufgeschlossene Faserstoff-Suspension über einen Eintrag 1 einer rejectbezogen einstufigen Flotationsvorrichtung 2 zugeführt, in welcher die Suspension kurzzeitig, beispielsweise während 2 bis 4 Minuten, auf jeden Fall während einer kürzeren Zeit als die übliche Mindestflotationszeit von ca. 10 Minuten flotiert. Besonders die grösseren Druckfarbenpartikel, z.B. Agglomerate von Laser-Ink mit 25-250 Micron Durchmesser, die einer Wäsche nicht zugänglich sind, können auf diese Weise herausflotiert werden. Dafür geeignete Flotationszellen sind beispielsweise in der Zeitschrift "Das Papier", Jahrgang 29, Heft 10A (Oktober 1975), Seiten 160 - 166, oder in den Escher Wyss Mitteilungen, Juni 1971, Seiten 1 - 10 beschrieben. Bei dieser kurzzeitigen Flotation wird bereits ein Teil der Druckfarben und der anderen Verunreinigungen entfernt und mit dem Flotationsschaum über eine Leitung 3 abgeführt und einem Abwasserreinigungssystem 4 zugeleitet.

Die bereits teilweise von Druckfarben und anderen Verunreinigungen befreite Suspension gelangt aus den Flotationszellen 2 über eine weitere Leitung 5 fakultativ über eine Zwischenreinigungsstufe 6, die als Hydrozyklon ausgebildet sein kann, in eine Waschvorrichtung 7. Dabei kann es sich um Waschvorrichtungen handeln, wie beispielsweise im "Wochenblatt für Papierfabrikation", Heft 20/1976, Seiten 778 - 784 beschrieben, oder um einen Doppelsiebwäscher vom Typ Escher Wyss "VARIO-Split". Gegebenenfalls kann auch auf die Zwischenschaltung eines Hydrozyklons 6 verzichtet werden.

Der Spuckstoff des Hydrozyklons 6 und das Abwasser der Waschvorrichtung 7 wird ebenfalls dem gemeinsamen Abwasserreinigungssystem 4 über Leitungen 8 bzw. 9 zugeführt, während der von Druckfarben und Verunreinigungen gereinigte Fasergutstoff über eine Leitung 10 der eigentlichen Papiermaschine zugeführt wird. Die Abtrennung der Feststoffe aus dem Abwasser der Waschvorrichtung 7 erfolgt mit dem Flotations- oder Sedimentationsaggregat 15. Das Klärwasser wird über eine Leitung 16 in das System zurückgeleitet.

Die für alle Deinking-Stufen gemeinsame Rejekt-Reinigungsstufe 4 weist einen für alle Rejekte gemeinsamen Schlammbehälter 11 auf, welcher eine Schlammpresse 12 speist, welche den zugeführten Schlamm entwässert und den Dickschlamm über einen Austrag 13 aus dem System hinaus transportiert, während das Filtrat über eine Leitung 14 ebenfalls in das System zurückgeleitet werden kann, beispielsweise vor die Flotationsstufe.

Während in dem vorstehend beschriebenen Verfahrensschema die Rejekte der Flotationszelle 2 und des Hydrozyklons 6 über Leitungen 3 bzw. 8 direkt in den Schlammbehälter 11 gelangen, können bei einem abgewandelten Verfahren die Rejekte des Hydrozyklons 6 stattdessen auch zunächst über Leitung 8' der Reinigungsstufe 15 zugeführt werden, wobei die Leitung 8 entfällt.

Figur 2 zeigt eine Deinking-Anlage in schematischer Form, wobei nur die wesentlichen Teile der Anlage dargestellt sind und auf die Wiedergabe sekundärer Aggregate und von Nebenkreisläufen verzichtet wurde.

## Patentansprüche

1. Verfahren zur Entfernung von Verunreinigungen, wie Druckfarben oder dergleichen, aus Altpapier, wobei eine durch Auflösen von Altpapier gewonnene, mit Chemikalien versetzte Faserstoff-Suspension unter Abführung des Druckfarbenpartikel und gegebenenfalls andere flotierbare Substanzen enthaltenden Flotationsschaumes als Flotations-Reject in einer Flotationsstufe (2) flotiert und dann aus der flotierten Faserstoff-Suspension weitere Druckfarbenpartikel und Verunreinigungen in mindestens einer Waschstufe (7) ausgewaschen und als Waschstufen-Reject abgeführt werden, wobei die Flotation (2) als rejectbezogen einstufige, kurzzeitige Flotation während einer Zeit von weniger als 10 Minuten, vorzugsweise zwischen 2 und 4 Minuten, durchgeführt wird und die Flotationsstufen-Rejecte direkt ohne Zwischenreinigung zusammen mit den Waschstufen-Rejecten in einer gemeinsamen Abwasserreinigung (4) zwischen zwei zusammenlaufenden Siebbändern eingedickt werden und der bei der Abwasserreinigung anfallende Dickschlamm abgeführt wird und das anfallende Klärwasser zur Wiederverwendung zurückführbar ist.

2. Verfahren nach Anspruch 1, dadurch gekennzeichnet, daß die Faserstoff-Suspension nach Verlassen der Flotationsvorrichtung (2) mittels eines Hydrozyklons (6) von weiteren Verunreinigungen befreit wird, wobei die Rejecte des Hydrozyklons ebenfalls der gemeinsamen Abwasserreinigungsvorrichtung (4) zugeführt werden.

3. Verfahren nach einem der Ansprüche 1 bis 2, dadurch gekennzeichnet, daß die Abwasserreinigung (4) in einer Reinigungsstufe (15) für die Waschstufen-Rejecte und einer Eindickungsstufe (12) vorgenommen wird.

4. Vorrichtung zur Durchführung des Verfahrens nach Anspruch 1 mit einem Pulper (20) zur Altpapier-Auflösung und Zugabe von Chemikalien, gegebenenfalls nachfolgendem Dickstoffreiniger(21), gegebenenfalls nachfolgendem Entstipper(22), nachfolgender rejectbezogen einstufiger Flotationseinrichtung (23) zur Behandlung der Faserstoffsuspension, aus der die gereinigte Faserstof-Suspension eventuell über eine Zwischenverdünnung in eine Wascheinrichtung (30) weitergeleitet wird sowie mit einer Abwasserreinigungsanlage (25 a, 25 b, 29), dadurch gekennzeichnet, daß sowohl die Rejectleitung der Flotationseinrichtung (23) als auch die der Wascheinrichtung (30) ohne Zwischenreinigung mit der Abwasserreinigungsanlage (25a, 25 b, 29) verbunden sind, wobei zur Eindickung eine Schlammpresse (25b) mit zusammenlaufenden Siebbändern vorhanden ist, der die Rejecte aus der Wascheinrichtung (30) und, direkt ohne Zwishenreinigung, aus der Flotationseinrichtung (23) zugeführt werden.

5. Vorrichtung nach Anspruch 4, dadurch gekennzeichnet, daß zwischen Flotationseinrichtung (23) und Wascheinrichtung (30) ein Hydrozyklon (27) zwischengeschaltet ist, dessen Rejectleitung über die Leitung (28) ebenfalls an die Abwasserreinigungsanlage (25a, 25 b, 29) angeschlossen ist.

6. Vorrichtung nach Anspruch 4 oder 5, dadurch gekennzeichnet, daß die Abwasserreinigungsanlage eine Reinigungseinrichtung (29) für die Waschstufen rejecte aufweist, deren Klarwasserleitung (34) mit der Reinigungsanlage verbunden ist, sowie daß wahlweise die Filtratleitung (35) der Schlammpresse(25b) mit den Prozeßwassereingängen der Flotationseinrichtung (23) und/oder mit der Wascheinrichtung (30) verbunden sind.

## Claims

1. Process for removing impurities, such as printing inks or the like, from waste paper, whereby a fibrous material suspension which has been obtained by disintegrating waste paper and to which chemicals have been added is floated in a flotation stage (2), carrying away the particles of printing ink and if applicable flotation froth containing other floatable substances as a flotation reject, and then further printing ink particles and impurities are washed out from the floated fibrous material suspension in at least one washing stage (7) and are removed as a washing stage reject, characterised in that the flotation (2) is carried out as a single-stage, brief flotation and that the flotation stage rejects are thickened directly without intermediate cleaning, together with the washing stage rejects, in a common waste water cleaning operation (4), with the thick slurry produced during the waste water cleaning operation being removed and the clear water produced being able to be recycled for re-use.

2. Process according to Claim 1, characterised in that the flotation (2) is carried out for a period of less than 10 minutes, preferably between 2 and 4 minutes.

3. Process according to Claim 1 or 2, characterised in that after leaving the flotation apparatus (2) the fibrous material suspension is freed from further impurities by means of a hydrocyclone (6), with the rejects of the hydrocyclone likewise being supplied to the common waste water cleaning apparatus (4).

4. Process according to one of Claims 1 - 3, characterised in that the washing of the fibrous material suspension is carried out in a plurality of washing stages (7).

5. Process according to one of Claims 1 - 4, characterised in that the waste water cleaning (4) is carried out in a cleaning stage (15) and a thickening stage (12), with the waste water being separated into clear water, thick sludge and thick sludge filtrate and the clear water being recycled into the process, whereas the thick sludge filtrate is selectively recycled into the process or sent to an external waste water cleaning plant ARA.

6. Apparatus for performing the process according to Claim 1, characterised by a flotation apparatus (23), a washing apparatus (30) and a waste water cleaning apparatus (25a, 25b, 29), with the washing apparatus (30) being connected to the flotation apparatus (23) and both the reject line of the flotation apparatus (23) and of the washing apparatus (30) being connected to the waste water cleaning apparatus (25a, 25b, 29).

7. Apparatus according to Claim 6, characterised in that a hydrocyclone (27) is interposed between the flotation apparatus (23) and the washing apparatus (30), the reject line of which hydrocyclone is likewise connected to the waste water cleaning apparatus (25a, 25b, 29) via the line (28).

8. Apparatus according to Claim 6 or 7, characterised in that the waste water cleaning apparatus has a cleaning apparatus (29) and a sludge thickening apparatus (25a, 25b), the clear water line (34) of the cleaning unit of which and also optionally the filtrate line (35) of the sludge thickening apparatus is connected to the process water inlets of the flotation apparatus (23) and/or of the washing apparatus (30).

9. Apparatus according to Claim 8, characterised in that the reject line (24) of the flotation apparatus (23) is connected directly to the thickening apparatus (25a, 25b).

## Revendications

1. Procédé pour l'élimination d'impuretés telles que des encres d'imprimerie ou autres dans des vieux papiers, dans lequel une suspension de matière fibreuse obtenue par désagrégation de vieux papiers, mélangée à des agents chimiques, est mise en flottation dans un étage de flottation (2) avec évacuation des particules d'encres d'imprimerie et, le cas échéant, de la mousse de flottation contenant d'autres substances flottables sous la forme de rejet de flottation, et ensuite d'autres particules d'encres d'imprimerie et autres impuretés sont éliminées de la suspension de matière fibreuse ayant été soumise à flottation, par lavage dans au moins un étage de lavage (7), et sont évacuées en tant que rejet de l'étage de lavage, dans lequel la flottation (2) est réalisée sous la forme d'une flottation s'appliquant au rejet, à un seul étage, de courte durée pendant un temps de moins de 10 minutes, de préférence entre 2 et 4 minutes, et les rejets de l'étage de flottation sont épaissis entre deux courroies filtrantes circulant ensemble, directement sans épuration intermédiaire, ensemble avec les rejets de l'étage de lavage, dans un dispositif commun (4) d'épuration d'eau résiduaire, et la boue compacte produite dans l'épuration de l'eau résiduaire est évacuée et l'eau clarifiée est recyclable pour être réutilisée.

2. Procédé selon la revendication 1, caractérisé en ce que la suspension de matière fibreuse est débarrassée d'autres impuretés après sa sortie du dispositif de flottation (2) au moyen d'un hydro-cyclone (6), les rejets de l'hydrocyclone étant également dirigés vers le dispositif commun d'épuration de l'eau résiduaire (4).

3. procédé selon une des revendications 1 et 2, caractérisé en ce que l'épuration de l'eau résiduaire est réalisée dans un étage d'épuration (15) pour les rejets de l'étage de lavage et dans un étage épaississeur (12).

4. Dispositif pour la mise en oeuvre du procédé selon la revendication 1 avec un pulpeur (20) pour la désagrégation de vieux papiers et l'addition d'agents chimiques, le cas échéant avec, en aval, un épurateur (21) de matière épaissie, le cas échéant avec, en aval, un séparateur (22), suivis d'un dispositif de flottation (23) s'applicant aux rejets, à un seul étage, pour le traitement de la suspension de matière fibreuse, à la sortie duquel la suspension de matière fibreuse épurée est dirigée, éventuellement après dilution intermédiaire, dans un dispositif de lavage (30), ainsi qu'avec une installation (25a, 25b, 29) d'épuration d'eau résiduaire, **caractérisé** en ce que aussi bien la conduite de rejets du dispositif de flottation (23) que celle du dispositif de lavage (30) sont reliées, sans épuration intermédiaire, à l'installation (25a, 25b, 29) d'épuration d'eau résiduaire, tandis qu'il est prévu pour l'épaississement une presse à boue (25b) avec des courroies filtrantes circulant ensemble, vers laquelle sont dirigés les rejets du dispositif de lavage (30) et, directement sans épuration intermédiaire, ceux du dispositif de flottation (23).

5. Dispositif selon la revendication 4, caractérisé en ce qu'il est interposé, entre le dispositif de flottation (23) et le dispositif de lavage (30), un hydro-cyclone (27) dont la conduite de rejet est également reliée par la conduite (28) à l'installation d'épuration (25a, 25b, 29) d'eau résiduaire.

6. Dispositif selon la revendication 4 ou 5, caractérisé en ce que l'installation d'épuration d'eau résiduaire présente un dispositif d'épuration (29) pour les rejets de l'étage de lavage, dont la conduite (34) d'eau clarifiée est reliée à l'installation d'épuration, et en ce que, facultativement, la conduite de filtrat (35) de la presse à boue (25b) est reliée aux entrées d'eau de traitement du dispositif de flottation (23) et/ou du dispositif de lavage (30).

FIG.1

FIG.2